# EUROPÄISCHE PATENTSCHRIFT

(11) **EP 2 451 640 B1**
(45) Veröffentlichungstag und Bekanntmachung des Hinweises auf die Patenterteilung: **01.05.2013**
(21) Anmeldenummer: 10725069.8
(22) Anmeldetag: 25.05.2010
(51) Int. Cl.: B32B 15/20, B32B 27/00, C09D 123/02, C09D 133/08, C09D 133/10, C09D 167/00

(54) **HALOGENFREIE HEISSVERSIEGELUNGSMASSE FÜR ALUMINIUMFOLIEN GEGEN POLYVINYLCHLORID- UND POLYSTYROLBEHÄLTER**
HALOGEN FREE HOT SEALING COMPOSITION FOR ALUMINIUM FOILS TOWARDS CONTAINERS MADE OF POLYVINYLCHLORIDE AND POLYSTYRENE
COMPOSITION THERMOSOUDABLE LIBRE DE HALOGENES POUR DES FEUILLES D'ALUMINIUM UTILISANT CONTRE DES CONTENANTS FABRIQUÉS DE CHLORURE DE POLYVINYL ET DE POLYSTYRÈNE

(30) Priorität: 10.07.2009 DE 102009027623
(43) Veröffentlichungstag der Anmeldung: 16.05.2012
(73) Patentinhaber: Evonik Röhm GmbH, 64293 Darmstadt (DE)
(72) Erfinder: BORGMANN, Cornelia, 07928 Chatham, NJ (US); POPPE,Dirk, 60385 Frankfurt am Main (DE); BALK, Sven, 60594 Frankfurt (DE); KELLER, Bruno, 55263 Wackernheim (DE); JANAS, Wolfgang, 63826 Geiselbach (DE); SEIPEL, Elke, 63755 Alzenau (DE)
(86) Internationale Anmeldenummer: PCT/EP2010/057116
(87) Internationale Veröffentlichungsnummer: WO 2011/003670

(56) Entgegenhaltungen:
- WO-A1-99/40140

## Beschreibung

### Gebiet der Erfindung

Die vorliegende Erfindung umfasst ein einkomponentiges Bindemittel für Heißsiegelanwendungen, das mit einer guten Metallhaftung vor allem gegenüber Aluminium, zu guten Siegelnahtfestigkeiten nach der Heißversiegelung gegen Polystyrol oder Polyvinylchlorid führt.
Ein wichtiger Aspekt der Erfindung ist es, dass die Metallhaftung und die Heißsiegeleigenschaften mit halogenfreien Formulierungen gewährleistet werden können.

Im Bereich der Verpackung von Lebensmitteln und Tabletten sind außer Polypropylen (PP) und Polyethylenterephthalat (PET) vor allem Polystyrol (PS), und Polyvinylchlorid (PVC) von großer Bedeutung. In vielen bekannten Verpackungsformen werden diese Materialien gegen Aluminium-Folien oder Aluminium beschichtete Verbundsysteme heißversiegelt. Zur Heißversiegelung von Polystyrol- oder PVC-Versiege!ung haben sich vor allem Poly(meth)acrylatharze wie z. B. DEGALAN ^{®} P 24 oder DEGALAN ^{®} N 80 bewährt. Diese Harze müssen jedoch zusätzlich zur Verbesserung der Metallhaftung mit weiteren Bindemitteln formuliert werden, weil sonst die Siegelnahtfestigkeit nicht ausreichend ist. Bei diesen zusätzlichen Formul ierungsbestandteilen handelt es sich zumeist um halogenhaltige Polymere wie Polyvinylchloride oder Vinylchlorid haltige Copolymere wie zum Beispiel Vinylite VMCH der Firma Union Carbide (bzw. UCAR VMCH der Fa. Dow Chemical). Bedenklich sind solche Systeme, wenn die halogenhaltigen Materialien migrieren können. Allgemein werden solche Polymere im Lebensmittelkontakt eher als kritisch angesehen.

DEGALAN ^{®} P24 ist ein Copolymer aus Methylmethacrylat und Butylmethacrylat und wird von der Röhm GmbH & Co. KG in den Handel gebracht. DEGALAN ^{®} N80 ist ein Methylacrylat-Ethylmethacrylat-Copolymer und wird ebenfalls von der Röhm GmbH & Co. KG in den Handel gebracht.

### Stand der Technik

An die Stelle von Gefäßen und Behältern aus Holz oder aus anorganischen Werkstoffen wie Metall, Glas, Keramik in der Lebensmittelverpackung sind in der Gegenwart vielfach Kunststoffprodukte getreten. Besonders hoch sind die Anforderungen in jedem Falle, wenn die Gefäße bzw. Behälter zur Aufnahme bzw. Konservierung von Lebensmitteln dienen.

Ein maßgeblicher Gesichtspunkt der Lebensmittelkonservierung, sei es durch Dehydratisierung, Gefrieren oder Sterilisieren, ist die vollständige Verhinderung mikrobiellen Wachstums. Daraus ergibt sich vielfach der Zwang, die Behälter gasdicht zu verschließen. Darüber hinaus sind bei Kunststoffbehältern die mechanische Stabilität, Kontrolle des Wassergehalts, sowie die Einwirkung der Atmosphäre und des Lichts zu berücksichtigen. (Vgl. Ullmann's Encyclopedia of Industrial Chemistry 25th Ed. Vol. A11, 523 - 560; 583 - 618 VCH 1988; dort werden **auch die geltenden Normen abgehandelt**). **Zum Verschließen von Kunststoffgefäßen werden in der** Lebensmitteltechnologie, insbesondere bei Molkereiprodukten wie Joghurtbechem, weithin mit einem Siegellack beschichtete Aluminiumdeckel verwendet.

Mit DEGALAN ^{®} PM 555 (Hersteller: Röhm GmbH & Co. KG), einem speziellen, lösemittelhaltigen Bindemittelsystem auf Basis von Polyolefin/Poly(meth)acrylat in Butylacetat/Methylethylketon, ist es gelungen, ein Bindemittel zu entwickeln, das für die Versiegelung von Aluminiumfolien gegen Polypropylen hervorragend geeignet ist. Darüber hinaus ist es mit DEGALAN ^{®} PM 555 aber auch möglich, ebenso gute Versieglungen gegen Polystyrol und PVC durchzuführen. DEGALAN ^{®} PM 555 muss zur Erzielung der Aluminiumhaftung mit PVC-Mischpolymerisaten wie z. B. VINYLITE ^{®} VMCH grundiert, kann aber auch in entsprechender Kombination als Einschichtsystem eingesetzt werden. VINYLITE ^{®} VMCH ist ein säurehaltiges PVC-Polymer (Vertrieb: Union Carbide).

DEGALAN ^{®} 4150-E (Hersteller: Röhm GmbH & Co. KG) schließlich wurde entwickelt, um die bekannte Heißsiegelmasse für Aluminium- und Kunststofffolien so zu verbessern, dass anstelle des bisher üblichen lösungsmittelhaltigen Bindemittelsystems aus Butylacetat und Methylethylketon ein Lösungsmittelsystem eingesetzt werden kann, das nicht in der HAPS-Liste (Hazardous Air Pollutants) aufgelistet ist.

Mit DEGALAN ^{®} PM 666 bzw. DEGALAN ^{®} 4151-E (Hersteller jeweils: Röhm GmbH & Co. KG) wurden zwei insofern modifizierte Polymersysteme zur Verfügung gestellt, dass eine gute Metallhaftung auf Aluminium und somit eine gute Siegelnahtfestigkeit auch ohne Formulierung mit haftvermittelnden Polymerkomponenten gewährleistet werden kann. Beide Produkte werden jedoch über ein kompliziertes mehrstufiges Verfahren hergestellt. Dies rechtfertigt sich insofern, dass die Bindemittel zusätzlich zum Heißversiegeln von Polystyrol (PS) oder Polyvinylchlorid (PVC) auch für Polypropylen (PP) oder Polyethylen (PE) gut geeignet sind. Ziel der vorliegenden Erfindung war es jedoch ein einstufig herstellbares Heißsiegelsystem für die weniger anspruchsvollen, polaren Verpackungen aus PS oder PVC herzustellen.

DE 101 50 898 (Röhm) betrifft ein Heißsiegelsystem aus einem Olefinpolymer oder Olefincopolymer A, einem Methacrylatcopolymer B und einem Pfropfpolymerisat AX aus den obenstehenden Komponenten sowie einem Lösungsmittel oder Lösungsmittelgemisch. Das Heißsiegelsystem zeichnet sich durch hohe Wärmestandfestigkeit und kurze Siegelzeiten aus.
Die Schreibweise (Meth)acrylat bedeutet hier sowohl Methacrylat, wie z.B. Methylmethacrylat, Ethylmethacrylat usw., als auch Acrylat, wie z.B. Methylacrylat, Ethylacrylat usw., sowie Mischungen aus beiden.

Silyl-Gruppen enthaltende Systeme für Heißsiegelanwendungen sind bis dato nur sehr selten beschrieben worden. In US 3,445,426 werden Aminosilane als Haftvermittler in Form einer Grundierung auf eine Metallfolien aufgetragen. Anschließend wird mit der eigentlichen Heißsiegelschicht beschichtet. Dieses Verfahren verfügt über große Nachteile, da es sich nicht nur um ein mehrstufiges Beschichtungsverfahren handelt, sondern mit den Aminosilanen monomere Verbindungen eingesetzt werden, die auch nach dem Versiegeln der Lebensmittelverpackung migrieren und damit das Lebensmittel kontaminieren können.
In EP 1728622 werden Beschichtungen beschrieben, die eine entsprechende Silylverbindung als Haftvermittler enthalten. Dabei kann es sich neben Aminosilanen auch um Epoxysilane handeln. Der Einsatz solcher Haftvermittler werden auch in anderen Formulierungen geschildert: JP 2006282968, JP 2004306368 oder JP 2004322602. Insbesondere in JP 63075049 wird die Kombination mit Poly(meth)acrylaten in der Formulierung beschrieben. Jede dieser Formulierungen hat jedoch den Nachteil der Migration niedermolekularer Silylverbindungen.

### Aufgabe

Aufgabe der vorliegenden Erfindung ist die Bereitstellung eines neuen Beschichtungssystems, insbesondere geeignet zur Heißversiegelung von Aluminiumfolien gegenüber verschiedenen Untergründen, insbesondere im Bereich von Lebensmittelverpackungen, welche zumindest einige der Nachteile der Beschichtungssysteme des Standes der Technik nicht oder nur in verringertem Maße aufweisen.

Eine besondere Aufgabe besteht darin, ein Beschichtungssystem zur Verfügung zu stellen, das gegenüber dem Stand der Technik in verringertem Maße, idealer Weise keine störenden, migrierenden oder schädlichen Bestandteile in Lebensmittel abgibt.

Eine weitere Aufgabe besteht darin, ein Bindemittel als Bestandteil des Beschichtungssystems zu synthetisieren, das einkomponentig verwendbar und einfach herstellbar sein soll.

Es besteht darüber hinaus die Aufgabe, dass bei den üblichen Taktzeiten, die bei der Heißsiegelung von Kunststofffolien angewandt werden, ausreichend hohe Festigkeiten des Verschlusses erreicht werden.

Eine weitere spezielle Aufgabe besteht darin, ein Beschichtungssystem zur Verfügung zu stellen, welches eine Heißversiegelung von Verpackungen derart ermöglicht, dass diese von der Versiegelung über den Transport bis zum Endverbraucher eine hinreichende mechanische Stabilität aufweisen, zum Zeitpunkt der gewollten Öffnung dagegen leicht wieder zu öffnen sind.

Eine weitere Aufgabe ist es, ein Heißsiegellackbindemittel zu entwickeln, das dazu geeignet ist, Aluminium-Folien bzw. Aluminium-beschichtete Folien gegen polare Bechermaterialien wie Polystyrol oder Polyvinylchlorid zu verschließen. Die Versiegelung soll gegenüber diesen Materialkombinationen eine mindestens gleichwertige Siegelleistung aufweisen wie die bereits etablierten Heißsiegelsysteme (z.B. Degalan ^{®} PM 555).

Weitere nicht explizit genannte Aufgaben ergeben sich aus dem Gesamtzusammenhang der nachfolgenden Beschreibung, Ansprüche und Beispiele.

### Lösung

Die Aufgaben werden gelöst durch ein heißsiegelfähiges, zur Versiegelung von Aluminiumfolien gegenüber verschiedenartigen Untergründen wie Polystyrol, Polyester oder Polyvinylchlorid geeignetes Beschichtungssystem, enthaltend ein Silylgruppen tragendes Bindemittel, dadurch gekennzeichnet, dass es sich bei dem Bindemittel um ein Poly(meth)acrylat handelt, das ohne die Coformulierung von halogenhaltigen Polymeren, beschichtet auf einer Aluminiumfolie und anschließend gegen Polystyrol oder Polyvinylchlorid heißversiegelt zu guten Heißsiegelnahtfestigkeiten führt. Vorteil eines solchen Bindemittelsystems ist es, dass es bestehend aus nur einer Polymerkomponente sehr gute Heißsiegeleigenschaften aufweist. Ferner hat ein halogenfreies Beschichtungssystem den Vorteil, dass eine Migration der Halogenatom-haltigen Formulierungsbestandteile ausgeschlossen werden kann.

Im Weiteren ist der Begriff Aluminiumfolie synonym auch für Verbundfolien, die auf der zu versiegelnden Seite mit Aluminium beschichtet sind, zu verstehen. Es wurde gefunden, dass bei den üblichen Taktzeiten, die bei der Heißsiegelung von Kunststofffolien angewandt werden, ausreichend hohe Festigkeiten des Verschlusses erreicht werden.
Die Versiegelung zeigt gegenüber Aluminiumfolien vergleichbare Siegel- und Barriereeigenschaften, wie die bereits etablierten Heißsiegelsysteme (z.B. DEGALAN ^{®} PM 555).
Es wurde eine hohe Haftfestigkeit bereits bei relativ hohen Temperaturen direkt nach der Versiegelung erreicht, (hohe Wärmestandfestigkeit). Damit können kurze Zykluszeiten beim Versiegeln erreicht werden.

Die erreichten Siegelnahtfestigkeiten mit dem erfindungsgemäßen Bindemittel betragen mindestens 4 N/15mm, in der Regel mehr als 6 N/15mm, besonders häufig sogar mehr als 8 N/15mm. Die Siegelnahtfestigkeiten wurden nach dem in den Beispielen beschriebenen Verfahren bestimmt. Alle angegebenen Werte zur Siegelnahtfestigkeit beziehen sich auf das dort beschriebene Verfahren zur **Beschichtung der Folien, Heißversiegelung und Messung der** Siegelnahtfestigkeit.

Bei den erfindungsgemäßen silylfunktionalisierte Verbindungen, die zur Funktionalisierung der Poly(meth)acrylate in der Polymerisation eingesetzt werden, handelt es sich im Allgemeinen um Verbindungen der Form

Z-R³-Si(OR¹)_{b}R²ₐX_{c}.

Dabei steht R³ für einen Alkylrest mit einem bis 20 Kohlenstoffatomen, der linear, cylclisch oder verzweigt sein kann. Bevorzugt sind lineare Alkylreste R³ mit einem bis 10 Kohlenstoffatomen. Insbesondere bevorzugt sind Verbindungen, bei denen es sich bei R³ um einen zweibindigen -CH₂-, - CH₂CH₂- oder einen -(CH₂)₃- Rest handelt.
Bei R¹ bzw. R² handelt es sich um organische Reste, die jeweils identisch oder verschieden zueinander sind und ausgewählt aus der Gruppe der aliphatischen Kohlenwasserstoffreste bestehend aus 1 bis 20 Kohlenstoffatomen die linear, verzweigt oder cyclisch sind, R¹ kann dabei auch ausschließlich Wasserstoff sein,
X ausgewählt aus der Gruppe der hydrolisierbaren Reste, die ungleich Alkoxy bzw. Hydroxy sind,
Auch können sowohl R¹ als auch R² für identische oder jeweils für verschiedene Gruppen in der Silylverbindung stehen. Im Einzelnen können R¹ und R² beispielsweise folgende Bedeutungen haben: Methyl-, Ethyl-, Propyl-, isoPropyl, n-Butyl-, Isobutyl-, tert.-Butyl-, Pentyl-, Cyclopentyl-, Hexyl-, Cyclohexyl- , Heptyl-, Octyl-, Isooctyl-, Ethylhexyl-, Nonyl-, Decyl-, Eicosyl-, Isobornyl-, Lauryl- oder Stearyl-.
In einer anderen Ausführungsform kann es sich bei R¹ und/oder R² auch um Kohlenwasserstoffgruppen mit etherischem Sauerstoff bzw. kurze Polyethersequenzen handeln. Solche Verbindungen sind beispielsweise in DE 10 2005 057 801 beschrieben.
In einer bevorzugten Ausführungsform handelt es sich bei R² um lineare Alkylreste. In einer besonders bevorzugten Ausführungsform handelt es sich bei R² um Methyl- und/oder Ethylgruppen.
a, b und c sind jeweils ganze Zahlen zwischen 0 und 3 und die Summe von a, b und c ergibt 3. In einer bevorzugten Ausführungsform ist c = 0, a = 0 oder 1 und b = 2 oder 3. In einer besonders bevorzugten Ausführungsform sind a und c = 0 und b = 3.
Als Beispiele für die Silylreste seien -Si(OMe)₃, -SiMe(OMe)₂, -SiMe₂(OMe), - Si(OPh)₃, -SiMe(OPh)₂, -SiMe₂(OPh), -Si(OEt)₃, -SiMe(OEt)₂, -SiMe₂(OEt), - Si(OPr)₃, -SiMe(OPr)₂, -SiMe₂(OPr), -SiEt(OMe)₂, -SiEtMe(OMe), -SiEt₂(OMe), - SiPh(OMe)₂, -SiPhMe(OMe), -SiPh₂(OMe), -SiMe(OC(O)Me)₂, - SiMe₂(OC(O)Me), -SiMe(O-N=CMe₂)₂ oder -SiMe₂(O-N=CMe₂) aufgeführt. Wobei die Abkürzungen Me für Methyl-, Ph für Phenyl-, Et für Ethyl- und Pr für iso- bzw. n-Propyl- stehen.

Z steht für eine Gruppe, die in der radikalischen Polymerisation von Methacrylaten und/oder Acrylaten in die Kette eingebaut werden kann. Dabei kann es sich zum einen um eine copolymerisierbare Gruppe handeln, zum andere um eine Gruppe, die als Regler bzw. Kettenübertragungsreagenz in der radikalischen Polymerisation wirkt.
Im Falle eines Monomers handelt es sich bei Z um eine Gruppe, die in irgendeiner Form mit Acrylaten bzw. Methacrylaten copolymerisierbar ist. Beispiele dafür sind Vinyl-, Acryl- und Methacrylgruppen. Bevorzugt handelt es sich um eine Methacrylgruppe.
Als Beispiele für die (Meth)acrylreste seinen H₂C=CHC(O)O-CH₂-, H₂C=CCH₃C(O)O-CH₂-, H₂C=CHC(O)O-(CH₂)₂-, H₂C=CCH₃C(O)O-(CH₂)₂-, H₂C=CHC(O)O-(CH₂)₃- bzw. H₂C=CCH₃C(O)O-(CH₂)₃- aufgeführt.
Ein kommerziell verfügbares Monomer wäre zum Beispiel Dynasylan^{®} MEMO der Firma Evonik-Degussa GmbH. Dabei handelt es sich um 3-Methacryloxypropyltrimethoxysilan.

Der Anteil der silyl-funktionalisierten Monomere an der Gesamtmenge Monomere kann zwischen 0,1 Gew% und 20 Gew%, bevorzugt zwischen 0,5 Gew% und 10 Gew% und insbesondere bevorzugt zwischen 1Gew% und 5 Gew% liegen.

Im Falle eines Reglers handelt es sich bei Z um eine Gruppe, die eingesetzt wird, um den Polymerisationsgrad der entstehenden Makromoleküle zu begrenzen. Im Gegensatz zu den Inhibitoren zerstören sie jedoch nicht die wachstumsfähigen Radikal-Funktionalitäten, sondern übernehmen diese von den Enden der wachsenden Makromoleküls, um damit dann selbst das Wachstum einer neuen Kette auszulösen. Bei diesen Gruppen kann es sich beispielsweise um Mercapto- Aldehyde-, Di- bzw. Trihalogenmethyl- oder Acetal-Gruppen handeln. Besonders bevorzugt sind in diesem Fall Mercaptogruppen.
Bei den insbesondere bevorzugten regelnden Verbindungen handelt es sich um kommerziell leicht verfügbare Verbindungen, die z.B. als Haftvermittler große industrielle Bedeutung haben. Vorteil dieser Verbindungen ist ihre leichte Verfügbarkeit und ihr niedriger Preis. Ein Beispiel einer solchen Verbindung stellt 3-Mercaptopropyltrimethoxysilan, das von der Evonik Degussa GmbH unter dem Namen DYNALYSAN^{®} MTMO vertrieben wird, dar. Weitere verfügbare Silane sind 3-Mercaptopropyltriethoxysilan oder 3-Mercaptopropylmethyldimethoxysilan (Fa. ABCR). Besonders reaktiv sind die so genannten α-Silane. In diesen Verbindungen sind die Mercaptogruppe und die Silangruppe an das gleiche Kohlenstoffatom gebunden (R¹ ist also in der Regel -CH₂-). Entsprechende Silangruppen solcher Art sind besonders reaktiv und können somit in der späteren Formulierung zu einem breiteren Anwendungsspektrum führen. Beispiel für eine solche Verbindung wäre Mercaptomethylmethyldiethoxysilan (Fa. ABCR).

Die erfindungsgemäß verwendeten Poly(meth)acrylate setzen sich im Allgemeinen aus Monomeren, die ausgewählt sind aus der Gruppe der (Meth)acrylate wie beispielsweise Alkyl(meth)acrylate von gradkettigen, verzweigten oder cycloaliphatischen Alkoholen mit 1 bis 40 C-Atomen, wie zum Beispiel Methyl(meth)acrylat, Ethyl(meth)acrylat, n-Butyl(meth)acrylat, i-Butyl(meth)acrylat, t-Butyl-(meth)acrylat, Pentyl(meth)acrylat, 2-Ethylhexyl(meth)acrylat, Stearyl-(meth)acrylat, Lauryl(meth)acrylat, Cyclohexyl(meth)acrylat, Isobornyl-(meth)acrylat; Aryl(meth)acrylate wie zum Beispiel Benzyl(meth)acrylat oder Phenyl(meth)acrylat die jeweils unsubstituiert oder 1-4-fach substituierte Arylreste aufweisen können; andere aromatisch substituierte (Meth)acrylate wie beispielsweise Naphthyl(meth)acrylat; Mono(meth)acrylate von Ethern, Polyethylenglycolen, Polypropylenglycolen oder deren Mischungen mit 5-80 C-Atomen, wie beispielsweise Tetrahydrofurfurylmethacrylat, Methoxy(m)ethoxyethylmethacrylat, 1-Butoxypropylmethacrylat, Cyclohexyl-oxymethylmethacrylat, Benzyloxymethylmethacrylat, Furfurylmethacrylat, 2-Butoxyethylmethacrylat, 2-Ethoxyethylmethacrylat, Allyloxymethylmethacrylat, 1-Ethoxybutylmethacrylat, **1-Ethoxyethylmethacrylat, Ethoxymethylmethacrylat,** Poly(ethylenglycol)methylether(meth)acrylat und Poly(propylenglycol)-methylether(meth)acrylat, zusammen.
Als Bestandteile von Monomergemischen eignen sich auch zusätzliche Monomere mit einer weiteren funktionellen Gruppe außer den bereits beschriebenen Silylgruppen, wie a,ß-ungesättigte Mono- oder Dicarbonsäuren, beispielsweise Acrylsäure, Methacrylsäure oder Itaconsäure; Ester der Acrylsäure oder Methacrylsäure mit zweiwertigen Alkoholen, beispielsweise Hydroxyethylacrylat, Hydroxyethylmethacrylat, Hydroxypropylacrylat oder Hydroxypropylmethacrylat; Acrylamid oder **Methacrylamid;** Dimethylaminoethylacrylat oder Dimethylaminoethylmethacrylat. Weitere geeignete Bestandteile von Monomergemischen sind beispielsweise Glycidylacrylat oder Glycidylmethacrylat.
Neben den zuvor dargelegten (Meth)acrylaten können die zu polymerisierenden Zusammensetzungen auch weitere ungesättigte Monomere aufweisen, die mit den zuvor genannten (Meth)acrylaten und mittels freiradikalischer Polymerisation copolymerisierbar sind. Hierzu gehören unter anderem 1-Alkene, wie 1-Hexen, 1-Hepten, verzweigte Alkene wie beispielsweise Vinylcyclohexan, 3,3-Dimethyl-1-propen, 3-Methyl-1-diisobutylen, 4-Methyl-1-penten, Acrylnitril, Vinylester wie z.B. Vinylacetat, Styrol, substituierte Styrole mit einem Alkylsubstituenten an der Vinylgruppe, wie z.B. α-Methylstyrol und α-Ethylstyrol, substituierte Styrole mit einem oder mehreren Alkylsubstituenten am Ring wie Vinyltoluol und p-Methylstyrol, heterocyclische Verbindungen wie 2-Vinylpyridin, 3-Vinylpyridin, 2-Methyl-5-vinylpyridin, 3-Ethyl-4-vinylpyridin, 2,3-Dimethyl-5-Vinylpyridin, Vinylpyrimidin, 9-Vinylcarbazol, 3-Vinylcarbazol, 4-Vinylcarbazol, 2-Methyl-1-vinylimidazol, Vinloxolan, Vinylfuran, Vinylthiophen, Vinylthiolan, Vinylthiazole, Vinyloxazole und Isoprenylether; Maleinsäurederivate, wie beispielsweise Maleinsäureanhydrid, Maleinimid, Methylmaleinimid und Diene wie z.B. Divinylbenzol, sowie in den A-Blöcken die jeweiligen hydroxyfunktionalisierten und/oder aminofunktionalisierten und/oder mercaptofunktionalisierten Verbindungen. Ferner können diese Copolymere auch derart hergestellt werden, dass sie eine Hydroxy- und/oder Amino - und/oder Mercaptofunktionalität in einem Substituenten aufweisen. Solche Monomere sind beispielsweise Vinylpiperidin, 1-Vinylimidazol, N-Vinylpyrrolidon, 2-Vinylpirrolidon, N-Vinylpirrolidin, 3-Vinylpyrrolidin, N-Vinylcaprolactam, N-Vinylbutyrolactam, hydrierte Vinylthiazole und hydrierte Vinyloxazole. Besonders bevorzugt werden Vinylester, Vinylether, Fumarate, Maleate, Styrole oder Acrylonitrile mit den A-Blöcken und/oder B-Blöcken copolymerisiert.

Im Einzelnen wird das Poly(meth)acrylat nach Anteil und Zusammensetzung zweckmäßigerweise im Hinblick auf die gewünschte technische Funktion **gewählt werden.**

Die erfindungsgemäß verwendeten Poly(meth)acrylate können mittels Substanz-, Emulsions-, Suspensions-, Mini- bzw. Mikrosuspensions- oder Lösungspolymerisation hergestellt werden. Bevorzugt wird das Polymer durch Lösungs- oder Suspensionspolymerisation dargestellt.
Bei dem eingesetzten Polymerisationsverfahren kann es sich um eine freiradikalische oder kontrolliert radikalische Polymerisation handeln. Beispiele für kontrolliert radikalische Polymerisationsverfahren sind nitroxide mediated polymerziation (NMP) und reversible addition-fragmentation chain transfer (RAFT) Polymerisation.

Die zu verwendenden Radikalinitiatoren hängen von der gewählten Polymerisationsmethode bzw. Polymerisationstechnik ab. Die jeweils zu verwendenden Initiatoren sind dem Fachmann bekannt bzw. können in der Polymerliteratur nachgeschlagen werden. Als Beispiel finden in der freiradiklaischen Lösungs- oder Suspensionspolymerisation in der Regel Azoverbindungen wie AIBN oder Perester wie tert.-Butylperoctoat oder Laurylperoxid als Radikalinitiator Verwendung. Weitere geeignete Initiatoren sind beispielsweise Octanoylperoxid, Decanoylperoxid, Benzoylperoxid, p-Ethylbenzoylperoxid, tert-Butylperbenzoat oder Azobis-(2,4-dimethy1)-valeronitril.

Gegebenenfalls können zur Einstellung des gewünschten Molekulargewichts anstelle der sylilfunktionellen Reglern Verbindungen eingesetzt werden, die regelnd wirken und über keine weitere Funktionalität oder über eine von Silylgruppen abweichende weitere Funktionalität wie zum Beispiel Hydroxylgruppen verfügen. Als Regler eignen sich z.B. Schwefelregler, insbesondere mercaptogruppenhaltige Regler, z.B. Dodecylmercaptan, Ethylhexylmercaptan oder Mercaptoethanol. Wenn Regler verwendet werden, liegt die Konzentrationen im Allgemeinen bei 0,1 Gew.-%, bis 2,0 Gew.-%, bezogen auf das Gesamtpolymerisat.

Die Polymerisation kann bei Normaldruck, Unter- oder Überdruck durchgeführt werden. Auch die Polymerisationstemperatur ist unkritisch. Im Allgemeinen liegt sie jedoch im Bereich von 0°C bis 200°C, vorzugsweise von 50°C bis 150°C und besonders bevorzugt von 70°C bis 120°C.

Eine Lösungspolymerisation zur Herstellung der erfindungsgemäßen Bindemittel kann in beliebigen Lösungsmitteln durchgeführt werden. Als Lösungsmittel werden bevorzugt Essigester wie Ethyl-, Propyl- oder Butylacetat, aliphatische Lösungsmittel wie Isooctan, cycloaliphatische wie Cyclohexan und carbonylische wie Butanon verwendet. Es können auch Mischungen verschiedener Lösungsmittel verwendet werden.
Der Anteil des Lösungsmittels oder des Lösungsmittelgemisches an den erfindungsgemäß konzentrierten Polymerisatlösungen kann z.B. 80 Gew.-%, in besonders günstigem Fall bis herab zu 20 Gew.-% betragen, vorzugsweise unter 70 Gew.-%, praktisch meist 60 Gew.-% bis 40 Gew.-%.

Besonders bevorzugt wird das erfindungsgemäße Bindemittel mittels Suspensionspolymerisation hergestellt. Überraschend wurde gefunden, dass eine Suspensionspolymerisation mit Silylgruppen haltigen Bausteinen prinzipiell in der bei der Suspensionspolymerisation üblichen Weise ohne Gelierung durchgeführt werden kann. Bei einer diskontinuierlichen Ausführungsform wird beispielsweise die Wasserphase, welche das Dispergiermittel, und gegebenenfalls sonstige an sich übliche Zusätze bereits enthält, in einem geeigneten Polymerisationsgefäß vorgelegt und es wird die Monomerphase, die in der Regel bereits die monomerlöslichen Zusatzstoffe, wie Initiatoren, Kettenregler oder Gleitmittel, gelöst enthält, unter Rühren zugegeben. In der Monomerphase wird auch das Silyl-funktionalisierte Monomer zugegeben. Bei den Dispergiermitteln kann es sich um organische oder anorganische Dispergiermittel handeln.

Der im Polymerisationssystem enthaltene Luftsauerstoff wird zweckmäßigerweise durch Evakuieren und Beaufschlagung mit Stickstoff entfernt. Die Polymerisation wird durch Aufheizen des Ansatzes in Gang gebracht. Das Monomer-Wasser-Verhältnis liegt in der Regel zwischen 1 : 4 und 1 : 1. Die Polymerisationstemperatur liegt üblicherweise zwischen etwa 60 und etwa 120 °C. Je nach dem angewandten Monomer-Wasser-Verhältnis erfolgt die Polymerisation adiabatisch oder unter zumindest teilweiser Abführung der Polymerisationswarme durch Kühlung. Nach beendeter Polymerisation wird der Ansatz abgekühlt und die gebildeten Polymerisatperlen werden durch Filtration oder Zentrifugation abgetrennt. Zweckmäßigerweise werden sie gleich auf dem Filter oder in der Zentrifuge mit Wasser ausgewaschen. Anschließend werden sie in einem geeigneten Trockner, beispielsweise in einem Trockenofen oder in einem Wirbelschichttrockner getrocknet.

Bei einer Herstellung mittels Lösungspolymerisation wird das silyl-funktionelle Monomer gleichzeitig mit den nicht funktionalisierten Monomeren polymerisiert. Dabei kann die Monomermischung teilweise oder gesamt vorgelegt bzw. zudosiert werden. Ein zusätzlich oder alternativ verwendeter silyl-funkioneller Regler wird ebenfalls der Monomerphase zugegeben. Als Lösungsmittel zur Polymerisation wird das zur später durchgeführten Beschichtung der Aluminiumfolie verwendete Lösungsmittel eingesetzt.
Supensions- oder Substanzpolymerisate dagegen müssen vor der Beschichtung der Aluminiumfolie gelöst werden. Zur Herstellung einer solchen Lösung sind die gleichen Lösungsmittel geeignet, die bereits zur Durchführung einer Lösungspolymerisation beschrieben wurden.

Der Gehalt des gesamten Polymerisats, bezogen auf die gesamte Lösung beträgt unabhängig vom Herstellungsverfahren mindestens 10 Gew.-%, wobei in der Praxis 40 Gew.-% bis 80 Gew.-% angestrebt werden, im Normalfall 45 Gew.-% bis 60 Gew.-%.

Das Beschichtungssystem zur Auftragung auf der Aluminiumfolie besteht aus dem erfindungsgemäßen Bindemittel und einem Lösungsmittel. Als Lösungsmittel werden bevorzugt Essigester wie Ethyl-, Propyl- oder Butylacetat, aliphatische Lösungsmittel wie Isooctan, cycloaliphatische wie Cyclohexan und carbonylische wie Butanon oder Aceton verwendet. Es können auch Mischungen verschiedener Lösungsmittel verwendet werden. Handelt es sich bei dem Beschichtungssystemen um Lösungspolymerisate, so können diese ohne weitere Modifikation mit dem Lösungsmittel aufgetragen werden, in dem die Polymerisation durchgeführt wurde. Es ist jedoch auch möglich, das Lösungspolymerisat mit dem gleichen oder einem anderen Lösungsmittel zu verdünnen oder den Feststoffgehalt des Lösungspolymerisats durch Evakuieren zu erhöhen.
Im Falle von Substanz- oder Suspensionspolymerisaten werden diese vor der Beschichtung der Aluminiumfolie in einem entsprechenden Lösungsmittel bzw. Lösungsmittelgemisch gelöst.
Der Anteil des Lösungsmittels oder des Lösungsmittelgemisches an den erfindungsgemäßen Beschichtungssystemen kann z.B. 80 Gew.-%, in besonders günstigem Fall bis herab zu 20 Gew.-% betragen, vorzugsweise unter 70 Gew.-%, praktisch meist 60 Gew.-% bis 40 Gew.-%.

Dem heißsiegelfähigen, zur Versiegelung verschiedenartiger Untergründe geeigneten Beschichtungssystem können darüber hinaus die für das Heißsiegeln üblichen Hilfs- und Zusatzstoffe zugefügt werden. Dabei handelt es sich erfindungsgemäß nicht um Zusatzstoffe, die die Haftung gegenüber Aluminium verbessern bzw. die Heißsiegelnahtfestigkeiten erhöhen, sondern um Zusatzstoffe, die üblicherweise Heißsiegelsystemen zugesetzt werden, um die Verarbeitbarkeit zu verbessern.

Beispielsweise kann zur Verminderung eines möglichen Abriebes in der Verarbeitung ein Polyamid z.B. des Typs VESTOSIND ^{®} 2159 (Fa. Degussa AG) zugesetzt werden. Dieser kann in einem Formulierungsanteil zwischen 0,1 Gew.-% und 10 Gew.-%, besser zwischen 0,1 Gew.-% und 5 Gew.-% zugegeben werden.
Das erfindungsgemäße Beschichtungssystem ist ohne Zusatz eines Haftvermittlers zum Heißversiegeln von Aluminiumfolien gegen PVC, PS oder ähnliche Substrate geeignet. Es ist trotzdem möglich, dem Beschichtungssystem Haftvermittler, z.B. PVC-Mischpolymerisate wie Vinylite VMCH der Fa. Union Carbide bzw. neuartige Folgeprodukte, zuzusetzen.
Die vorliegende Erfindung umfasst nicht nur ein Beschichtungssystem, das erfindungsgemäße Bindemittel enthaltend, sondern auch die mit diesem System beschichtete Aluminiumfolie sowie die mit dieser Folie heißversiegelten Lebensmittelverpackungen bzw. pharmazeutischen Verpackungen.

### Herstellung des Heißsiegelsystems

Die im Folgenden gegebenen Beispiele werden zur besseren Veranschaulichung der vorliegenden Erfindung gegeben, sind jedoch nicht dazu geeignet, die Erfindung auf die hierin offenbarten Merkmale zu beschränken.

### Beispiele

Verwendetes Folienmaterial:
Weichaluminiumfolie mit einer Dicke von 40 µm

Auftrag der Heißsiegellösung im Labor:
Die Heißsiegellösung wurde mit dem K-Handcoater Nr. 4 aufgezogen. Dabei wurden Trockenschichtdicken von 7 µm - 9 µm erhalten.

Trocknung der beschichteten Folien im Labor:
Die grundierten Folien wurden nach kurzer Ablüftzeit (5 - 10 Minuten) 15 Sekunden bei 180°C im Umluftofen getrocknet.

Heißversiegelung und Ermittlung der Siegelnahtfestigkeit:
Die Versiegelungen wurden mit dem Heißsiegelgerät (HSG/ET) der Fa. Brugger durchgeführt.

Siegelbedingungen:

| Temperatur: | 200°C |
|---|---|
| Druck: | 6 bar |
| Zeit: | 1 sec. |
| Siegelfläche: | 10 x 10 mm |

Zur Ermittlung der Siegelnahtfestigkeit wurden Proben in 15 mm breite Streifen geschnitten und mit der Zugprüfmaschine von Instron, Modell Nr. 1195 oder Zwick, Modell Nr. 1454 bei einer Geschwindigkeit von 100 mm/min. gezogen. Es wurde darauf geachtet, dass während des Abzugsversuches die bereits voneinander getrennten Folienteile mit dem noch unbeanspruchten Rest einen Winkel von 90 °C bilden.

Die Versiegelungen der PS-Becher erfolgten mit einem Labor-Becherversieglungsgerät VL-1600 der Firma BHS.

### Beispiel Lösungspolymerisation:

### Beispiel 1

In einem Doppelmantelgefäß mit angeschlossenem Thermostaten, Rückflusskühler, Blattrührer und Innenthermometer werden 350 g Ethylacetat, 30 g Methylmethacrylat, 120 g Butylmethacrylat und 2,5 g Dynasylan^{®} MEMO vorgelegt und unter Rühren auf 77 °C erhitzt. Die Lösung wird mit 1,7 g t-Butylper-2-ethylhexanoat versetzt. Nach 30 minütgem Rühren bei 80 °C, wird mittels einer Dosierpumpe eine Mischung aus 11,5 g Dynasylan^{®} MEMO, 55 g Methylmethacrylat, 220 g Butylmethacrylat und 3 g t-Butyl-per-2-ethylhexanoat über einen Zeitraum von 2½ Stunden zudosiert.
Nach weiteren 6 Stunden Nachreaktionszeit bei 77 °C wird die Polymerlösung abgekühlt und zur Verringerung der Lösungsviskosität mit 230 g Ethylacetat verdünnt.

### Vergleichsbeispiel V1

Analoge Durchführung zu Beispiel 1 ohne Zugabe des Dynasylan^{®} MEMO.

### Beispiel 2

In einen 5L Polymerisationsgefäß mit Heiz-Kühlmantel, ausgestattet mit Rührer und Rückflußkühler werden 3400 mL vollentsalztes Wasser vorgelegt, der Rührer auf eine Drehzahl von 300 Umdrehungen pro Minute eingestellt und auf eine Außentemperatur von 40 °C aufgeheizt. Es werden 70 g einer 10%igen wässrigen Lösung von Polyvinylalkohol (Hydrolysegrad: 88 mol%) und 0,5 g einer 40 %igen wässrigen Lösung von Natrium-Nitrilotriacetat zugegeben und durch Rühren verteilt. In einem Becherglas werden 1240 g (77,5 %) n-Butylmethacrylat, 280 g (17,5 %) Methylmethacrylat, 80 g (5 %) Dynasylan^{®} MEMO, 7 g Peroxan LP und 3,5 g TGEH gemischt und unter Rühren homogenisiert. Die Monomerstammlösung wird in den Reaktor gepumpt. Die Innentemperatur wird auf 80 °C geregelt. Die Polymerisation ist beendet, wenn die Wärmeentwicklung abbricht. Der Ansatz wird abgekühlt. Durch eine FilterNutsche wird die Mutterlauge von den Pofymerperlen abgetrennt, gründlich mit vollentsalztem Wasser gewaschen und im Trockenschrank bei 35 °C getrocknet.

### Beispiel 3

Analoge Durchführung zu Beispiel 2 unter Zugabe von 64 g Dynasylan^{®} MEMO.

### Vergleichsbeispiel V2

Analoge Durchführung zu Beispiel 2 ohne Zugabe des Dynasylan^{®} MEMO.

### Ergebnisse Siegelnahtfestigkeit

| Probe | Anteil Dynasylanl^{®} MEMO am Polymer | Siegelnahtfestigkeit |
|---|---|---|
| B1 | 4,0 Gew% | 4,1 N / 15 mm |
| V1 | 0 Gew% | 0,9 N / 15 mm |
| B2 | 5,0 Gew% | 11,3 N / 15 mm |
| B3 | 4,0 Gew% | 8,8 N / 15 mm |
| V2 | 0 Gew% | 2,2 N / 15 mm |

Durch den Einbau von Dynasylan^{®} MEMO in Polymeren, die als Bindemittel zur Heißversiegelung von Aluminiumfolien gegen Polystyrol eingesetzt werden, werden die Heißsiegelnahtfestigkeiten deutlich gegenüber den Vergleichsbeispielen sonst identischer Zusammensetzung ohne Dynasylan^{®} MEMO verbessert.

## Patentansprüche

1. Heißsiegelfähiges, zur Versiegelung von Aluminiumfolien gegenüber verschiedenartigen Untergründen geeignetes Beschichtungssystem, enthaltend ein (meth)acrylat basiertes Bindemittel und ein Lösungsmittel, **dadurch gekennzeichnet, dass**
eine mit diesem Beschichtungssystem ohne Zusatz weiterer Komponenten beschichtete Aluminiumfolie nach einer Heißsiegelung gegen Polystyrol eine Heißsiegelnahtfestigkeit von mindestens 4 N/15mm aufweist, und dass das (meth)acrylat basierte Bindemittel Silylgruppen aufweist.

2. Heißsiegelfähiges Beschichtungssystem gemäß Anspruch 1, **dadurch gekennzeichnet, dass**
eine mit diesem Beschichtungssystem ohne Zusatz weiterer Komponenten beschichtete Aluminiumfolie nach einer Heißsiegelung gegen Polystyrol eine Heißsiegelnahtfestigkeit von mindestens 6 N/15mm aufweist.

3. Heißsiegelfähiges Beschichtungssystem gemäß Anspruch 1 oder 2, **dadurch gekennzeichnet, dass**
das Beschichtungssystem halogenfrei ist.

4. Heißsiegelfähiges Beschichtungssystem gemäß einem der Ansprüche 1 bis 3, **dadurch gekennzeichnet, dass**
das (meth)acrylat basierte Bindemittel unter Copolymerisation von silylfunktionellen, mit (Meth)acrylaten copolymerisierbaren Monomeren und/oder unter Verwendung von silylfunktionellen Kettenübertragungsreagenzien hergestellt wurde.

5. Heißsiegelfähiges Beschichtungssystem gemäß Anspruch 4, enthaltend ein (meth)acrylat basiertes Bindemittel, **dadurch gekennzeichnet, dass** die zur Silylfunktionalisierung des Bindemittels eingesetzten Monomere eine ungesättigte, radikalisch polymerisierbare Gruppe und eine Silylgruppe enthalten.

6. Heißsiegelfähiges Beschichtungssystem gemäß Anspruch 4 oder 5, enthaltend ein (meth)acrylat basiertes Bindemittel, **dadurch gekennzeichnet, dass** die zur Silylfunktionalisierung des Bindemittels eingesetzten Kettenübertragungsreagenzien eine Thiolgruppe und eine Silylgruppe enthalten.

7. Heißsiegelfähiges Beschichtungssystem gemäß einem der Ansprüche 1 bis 6, enthaltend ein (meth)acrylat basiertes Bindemittel, **dadurch gekennzeichnet, dass** die zusätzliche Silylgruppe die Form
-Si(OR¹)_{b}R²ₐX_{c}
aufweist, wobei die organischen Resten R¹ bzw. R² jeweils identisch oder verschieden zueinander sind und ausgewählt aus der Gruppe der aliphatischen Kohlenwasserstoffreste bestehend aus 1 bis 20 Kohlenstoffatomen, die linear, verzweigt oder cyclisch sind, R¹ kann dabei auch ausschließlich Wasserstoff sein,
X ausgewählt aus der Gruppe der hydrolisierbaren Reste, die ungleich Alkoxy bzw. Hydroxy sind,
a, b und c jeweils ganze Zahlen zwischen 0 und 3 sind und die Summe von a, b und c 3 ergibt.

8. Heißsiegelfähiges Beschichtungssystem gemäß einem der Ansprüche 1 bis 7, enthaltend ein (meth)acrylat basiertes Bindemittel, **dadurch gekennzeichnet, dass** die Zusammensetzung zur Herstellung des Bindemittels zwischen 0,5 Gew% und 10 Gew%, bevorzugt zwischen 1 Gew% und 5 Gew% der silylfunktionellen Komponenten enthält

9. Heißsiegelfähiges Beschichtungssystem gemäß Anspruch 4, enthaltend ein (meth)acrylat basiertes Bindemittel, **dadurch gekennzeichnet, dass** das Bindemittel mittels Lösungs-, Substanz- oder Suspensionspolymerisation hergestellt wird.

10. Heißsiegelfähiges Beschichtungssystem gemäß Anspruch 1, **dadurch gekennzeichnet, dass** für das Heißsiegeln übliche Hilfs- und Zusatzstoffe enthalten sind.

11. Verfahren zur Versiegelung heißsiegelfähiger Untergründe, **dadurch gekennzeichnet, dass** ein Beschichtungssystem nach einem der vorstehenden Ansprüche verwendet wird.

12. Verfahren gemäß Anspruch 11 zur Versiegelung von Aluminiumfolie bzw Aluminium-beschichteten Folien gegen Polystyrol, Polyester und/oder Polyvinylchlorid mit einem Beschichtungssystem gemäß einem der Ansprüche 1 bis 11.

13. Verwendung des Beschichtungssystems gemäß einem der Ansprüche 1 bis 10 zum Heißsiegeln von Aluminiumfolie bzw. Aluminium-beschichteten Folien gegen Polystyrol, Polyester und/oder Polyvinylchlorid.

14. Aluminiumfolie, die mit einem Beschichtungssystem gemäß einem der Ansprüche 1 bis 10 beschichtet wurde.

15. Lebensmittelverpackung enthaltend eine Aluminiumfolie gemäß Anspruch 14.

## Claims

1. Heat-sealable coating system suitable for the sealing of aluminium foils with respect to various types of substrates and comprising a (meth)acrylate-based binder and a solvent,
**characterized in that**
the heat-seal seam strength of an aluminium foil coated with this coating system without addition of other components, after heat-sealing to polystyrene, is at least 4 N/15 mm, and that the (meth)acrylate-based binder has silyl groups.

2. Heat-sealable coating system according to Claim 1,
**characterized in that**
the heat-seal seam strength of an aluminium foil coated with this coating system without addition of other components, after heat-sealing to polystyrene, is at least 6 N/15 mm.

3. Heat-sealable coating system according to Claim 1 or 2,
**characterized in that**
the coating system is halogen-free.

4. Heat-sealable coating system according to any of Claims 1 to 3, **characterized in that**
the (meth)acrylate-based binder has been produced by using copolymerization of silyl-functional monomers copolymerizable with (meth)acrylates and/or by using silyl-functional chain-transfer reagents.

5. Heat-sealable coating system according to Claim 4, comprising a (meth)acrylate-based binder, **characterized in that** the monomers used for the silyl-functionalization of the binder comprise an unsaturated group capable of free-radical polymerization and a silyl group.

6. Heat-sealable coating system according to Claim 4 or 5, comprising a (meth)acrylate-based binder, **characterized in that** the chain-transfer reagents used for the silyl-functionalization of the binder comprise a thiol group and a silyl group.

7. Heat-sealable coating system according to any of Claims 1 to 6, comprising a (meth)acrylate-based binder, **characterized in that** the additional silyl group has the form
-Si (OR¹)_{b}R²ₐX_{c}
where the organic moieties R¹ and R² are respectively identical or different from one another and selected from the group of the aliphatic hydrocarbon moieties composed of from 1 to 20 carbon atoms which are linear, branched or cyclic, and R¹ here can also be exclusively hydrogen,
X is selected from the group of the hydrolysable moieties which are not alkoxy or hydroxy,
a, b and c are respectively integers from 0 to 3 and the sum of a, b and c is 3.

8. Heat-sealable coating system according to any of Claims 1 to 7, comprising a (meth)acrylate-based binder, **characterized in that** the composition for the production of the binder comprises from 0.5% by weight to 10% by weight, preferably from 1% by weight to 5% by weight, of the silyl-functional components.

9. Heat-sealable coating system according to Claim 4, comprising a (meth)acrylate-based binder, **characterized in that** the binder is produced by means of solution polymerization, bulk polymerization or suspension polymerization.

10. Heat-sealable coating system according to Claim 1, **characterized in that**, for the heat-sealing process, conventional auxiliaries and additives are present.

11. Process for the sealing of heat-sealable substrates, **characterized in that** a coating system according to any of the preceding claims is used.

12. Process according to Claim 11 for the sealing of aluminium foil or of aluminium-coated foils to polystyrene, polyester and/or polyvinyl chloride with a coating system according to any of Claims 1 to 11.

13. Use of the coating system according to any of Claims 1 to 10 for the heat-sealing of aluminium foil or aluminium-coated foils to polystyrene, polyester and/or polyvinyl chloride.

14. Aluminium foil which has been coated with a coating system according to any of Claims 1 to 10.

15. Packaging intended for food or drink and comprising an aluminium foil according to Claim 14.

## Revendications

1. Système de revêtement thermoscellable, approprié au scellage de films d'aluminium sur des supports de différents types, contenant un liant à base de (méth)acrylate et un solvant, **caractérisé en ce qu'**un film d'aluminium revêtu avec ce système de revêtement sans addition d'autres composants présente après un thermoscellage sur polystyrène une résistance du joint thermoscellé d'au moins 4 N/15 mm, et **en ce que** le liant à base de (méth)acrylate comporte des groupes silyle.

2. Système de revêtement thermoscellable selon la revendication 1, **caractérisé**
**en ce qu'**un film d'aluminium revêtu avec ce système de revêtement sans addition d'autres composants présente après un thermoscellage sur polystyrène une résistance du joint thermoscellé d'au moins 6 N/15 mm.

3. Système de revêtement thermoscellable selon la revendication 1 ou 2, **caractérisé en ce que** le système de revêtement est sans halogène.

4. Système de revêtement thermoscellable selon l'une quelconque des revendication 1 à 3, **caractérisé en ce que**
le liant à base de (méth)acrylate a été préparé par copolymérisation de monomères à fonction silyle, copolymérisables avec des (méth)acrylates, et/ou avec utilisation de réactifs de transfert de chaîne à fonction silyle.

5. Système de revêtement thermoscellable selon la revendication 4, contenant un liant à base de (méth)acrylate, **caractérisé en ce que** les monomères utilisés pour la fonctionnalisation silyle du liant comportent un groupe insaturé, apte à la polymérisation radicalaire, et un groupe silyle.

6. Système de revêtement thermoscellable selon la revendication 4 ou 5, contenant un liant à base de (méth)acrylate, **caractérisé en ce que** les réactifs de transfert de chaîne utilisés pour la fonctionnalisation silyle du liant comportent un groupe thiol et un groupe silyle.

7. Système de revêtement thermoscellable selon l'une quelconque des revendications 1 à 6, contenant un liant à base de (méth)acrylate, **caractérisé en ce que** le groupe silyle supplémentaire présente la forme
-Si(OR¹)_{b}R²ₐX_{c}
dans laquelle les radicaux organiques R¹ et respectivement R² sont chacun le même ou différent et choisis dans le groupe des radicaux hydrocarbonés aliphatiques constitués de 1 à 20 atomes de carbone, qui sont linéaires, ramifiés ou cycliques, R¹ pouvant également être exclusivement un atome d'hydrogène,
X est choisi dans le groupe des radicaux hydrolysables, qui sont différents d'alcoxy ou hydroxy, a, b et c représentent chacun des nombres entiers compris entre 0 et 3 et la somme de a, b et c est égale à 3.

8. Système de revêtement thermoscellable selon l'une quelconque des revendications 1 à 7, contenant un liant à base de (méth)acrylate, **caractérisé en ce que** la composition destinée à la préparation du liant contient entre 0,5 % en poids et 10 % en poids, de préférence entre 1 % en poids et 5 % en poids du composant à fonction silyle.

9. Système de revêtement thermoscellable selon la revendication 4, contenant un liant à base de (méth)acrylate, **caractérisé en ce que** le liant est préparé par polymérisation en solution, masse ou suspension.

10. Système de revêtement thermoscellable selon la revendication 1, **caractérisé en ce que** des adjuvants et additifs usuels pour le thermoscellage sont contenus.

11. Procédé pour le scellage de supports thermoscellables, **caractérisé en ce qu'**on utilise un système de revêtement selon l'une quelconque des revendications précédentes.

12. Procédé selon la revendication 11 pour le scellage de film d'aluminium ou de films revêtus d'aluminium sur du polystyrène, polyester et/ou poly(chlorure de vinyle) comportant un système de revêtement selon l'une quelconque des revendications 1 à 11.

13. Utilisation du système de revêtement selon l'une quelconque des revendications 1 à 10, pour le thermoscellage de film d'aluminium ou de films revêtus d'aluminium sur polystyrène, polyester et/ou poly(chlorure de vinyle).

14. Film d'aluminium, qui a été revêtu avec un système de revêtement selon l'une quelconque des revendications 1 à 10.

15. Emballage alimentaire contenant un film d'aluminium selon la revendication 14.
